# EUROPEAN PATENT APPLICATION

(11) **EP 4 817 396 A1**
(43) Date of publication of application: **07.10.2026**
(21) Application number: 25315113.8
(22) Date of filing: 01.04.2025
(51) Int. Cl.: A01D 46/28

(54) **MOBILE FRUIT HARVESTING MACHINE**

(71) Applicant: CNH Industrial France S.A.S., 91150 Morigny-Champigny (FR); CNH Industrial Belgium N.V., 8210 Zedelgem (BE); CNH Industrial Canada, Ltd., Saskatoon SK S7K 3S5 (CA)
(72) Inventor: Darrieutort, Anthony, 91150 Morigny-Champigny (FR); Roberge, Martin, Saskatoon, SK, S7K 3S5 (CA); Chovet, Rogelio, 8210 Zedelgem (BE); Briand, Valentin, 91150 Morigny-Champigny (FR)
(74) Representative: CNH Industrial IP Department

(57) **Abstract**

A mobile fruit harvesting machine (100), comprising: a conveyor (202) configured to receive harvested material (210), the harvested material (210) comprising a mixture of fruit (212), fruit juices (214) and debris (218), and convey the harvested material (210) in a conveying direction (C) through a separation region (204); an airflow system (206) configured to direct an airflow (208) through the harvested material (210) in the separation region (204), the airflow (208) being angled substantially non-parallel to the conveying direction (C), such that the fruit juice (214) is suspended in the airflow (208), and an impingement surface (220) for collecting at least part of the fruit juice (214) from the airflow (208), the impingement surface (222) comprising: a collection region (222) for collecting fruit juice (214) from the airflow (208);a delivery region (224) for directing the collected fruit juice (214) into a juice receptacle (230); and a juice flow path (223) configured such that the collected fruit juice (214) flows from the collection region (222) to the delivery region (224) along the juice flow path (223).

## Description

### FIELD

The present disclosure relates to mobile fruit harvesting machines, and methods of using mobile fruit harvesting machines.

### BACKGROUND

In modern industrial agriculture, machinery is increasingly used to perform tasks which were previously done by hand. For example, specialist harvesting machines are now used for harvesting fruit such as grapes, olives, or oranges. Mobile fruit harvesting machines are driven (either as self-propelled machines, or trailed behind a tractor) through an agricultural field, whereupon they collect and process fruit from the fruit trees or vines. Such machines typically comprise harvesting systems which remove the fruit from the tree or vine, and a conveying system for conveying the harvested fruit from the harvesting system to either an outlet or an internal storage tank or hopper. Depending on the fruit being harvested, further processing steps may be needed such as separating ripe and unripe fruit.

In some examples, the harvested fruit is then packaged for sale. However, in other examples, it is the juice or liquid content of the harvested fruit which is interest. For example, grapes may be harvested for their grape juice to make wine, while olives may be harvested for their oil. Oranges may also be harvested, both for the oranges themselves and for their juice.

It will be appreciated that high-efficiency fruit harvesting machines will be capable of providing improved agricultural yields.

### SUMMARY OF THE INVENTION

According to a first aspect, there comprises a mobile fruit harvesting machine, comprising: a conveyor configured to receive harvested material, the harvested material comprising a mixture of fruit, fruit juices and debris, and convey the harvested material in a conveying direction through a separation region; an airflow system configured to direct an airflow through the harvested material in the separation region, the airflow being angled substantially non-parallel to the conveying direction, such that the fruit juice is suspended in the airflow, and an impingement surface for collecting at least part of the fruit juice from the airflow, the impingement surface comprising: a collection region for collecting fruit juice from the airflow; a delivery region for directing the collected fruit juice into a juice receptacle; and a juice flow path configured such that the collected fruit juice flows from the collection region to the delivery region along the juice flow path. This system can provide a simple and effective means for extracting and collecting fruit juice from harvested material, which would otherwise be wasted. Thus, the overall collected agricultural yield can be increased.

As discussed below, the conveyor may comprise a conveyor belt, or any other suitable system for receiving harvested material and conveying the harvested material in a conveying direction through the separation region.

Optionally, the impingement surface is located downstream of the separation region along the airflow.

Optionally, the impingement surface further comprises an aggregator, and optionally the aggregator comprises at least one strake located along the juice flow path, or at least one corrugation extending from the delivery region. The collection region may collect fruit juice as droplets, and the aggregator may be configured to aggregate the fruit juice droplets from the collection region into larger droplets.

Optionally, the impingement surface is configured such that a component of the airflow flows along the impingement surface from the collection region to the delivery region. For example, the airflow may meet the impingement surface, and then split such that a component airflow flows along the along the impingement surface from the collection region to the delivery region. Another component of the airflow may be directed in a different direction over the impingement surface, or be directed away and off of the impingement surface.

Optionally, the airflow is ahgled substantially upwards, such that the fruit juice is carried away from the separation region in a direction comprising a vertical component.

Optionally, the airflow meets the collection region of the impinging surface at an impinging angle, the impinging angle being less than 90 degrees.

Optionally, the fan comprises a duct comprising a plurality of outlet vents, the outlet vents being configured to direct the airflow through the separation region.

Optionally, the outlet vents are spaced across a lateral direction substantially perpendicular to each of the airflow and conveying direction. In some examples, the outlet vents may also be spaced across the airflow and/or conveying directions. For example, the outlet vents may be spaced in a plurality of rows, each row extending across the lateral direction, and the rows being spaced apart from each other along the conveying direction.

Optionally, the impingement surface comprises side walls extending towards the separation region.

Optionally, the impingement surface is configured to generate a pressure gradient along the juice flow path, the pressure gradient inducing collected fruit juice to flow from the collection region to the delivery region along the juice flow path.

Optionally, the impingement surface is angled or curved such that the delivery region is located vertically lower than the collection region.

Optionally, the impingement surface is downward-facing.

Optionally, the conveyor is configured to launch a component of the harvested material in a substantially ballistic trajectory passing through the separation region.

Optionally, the conveyor comprises an entry conveyor and exit conveyor, wherein the conveyor is configured to launch the component of the harvested material from the entry conveyor to the exit conveyor.

Optionally, the juice receptacle comprises an orifice positioned vertically below the delivery region.

Optionally, the mobile fruit harvesting machine is a grape harvesting machine.

According to a second aspect, there comprises a method for processing harvested fruit within a mobile fruit harvesting machine, comprising the steps of: receiving harvested material comprising a mixture of fruit, fruit juice and debris; conveying the harvested material in a conveying direction through a separation region; separating the fruit juice from the harvested material by directing an airflow through the harvested material in the separation region, the airflow being angled substantially non-parallel to the conveying direction, such that the fruit juice is suspended in the airflow; collecting the fruit juice from the airflow using a collection region of an impingement surface; and directing the collected fruit juice along a juice flow path from the collection region into a delivery region of the impingement surface for collection into a juice collection region.

While the disclosure is amenable to various modifications and alternative forms, specifics thereof have been shown by way of example in the drawings and will be described in detail. It should be understood, however, that other embodiments, beyond the particular embodiments described, are possible as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### BRIEF DESCRIPTION OF THE DRAWINGS

Figure 1 shows an exemplary mobile fruit harvesting machine.
Figures 2a and 2b show a simplified diagram of an exemplary fruit juice recovery system. Figure 2a shows a side view, while Figure 2b shows a cross section of Figure 2a along the plane defined by the airflow axis 208A, looking towards the conveying direction C.
Figure 3 is a Computational Fluid Dynamics (CFD) - generated airflow plot illustrating the airflow patterns within an exemplary fruit juice recovery system.
Figures 4a and 4b are each CFD-generated graphics showing fruit juice buildup on an impingement surface.
Figures 5a-c each comprise a side and front view of an exemplary impingement surface. Each of Figures 5a-c illustrates a different example of an aggregator.
Figure 6 is a flowchart showing the steps of an exemplary method for processing harvested fruit.

### DETAILED DESCRIPTION

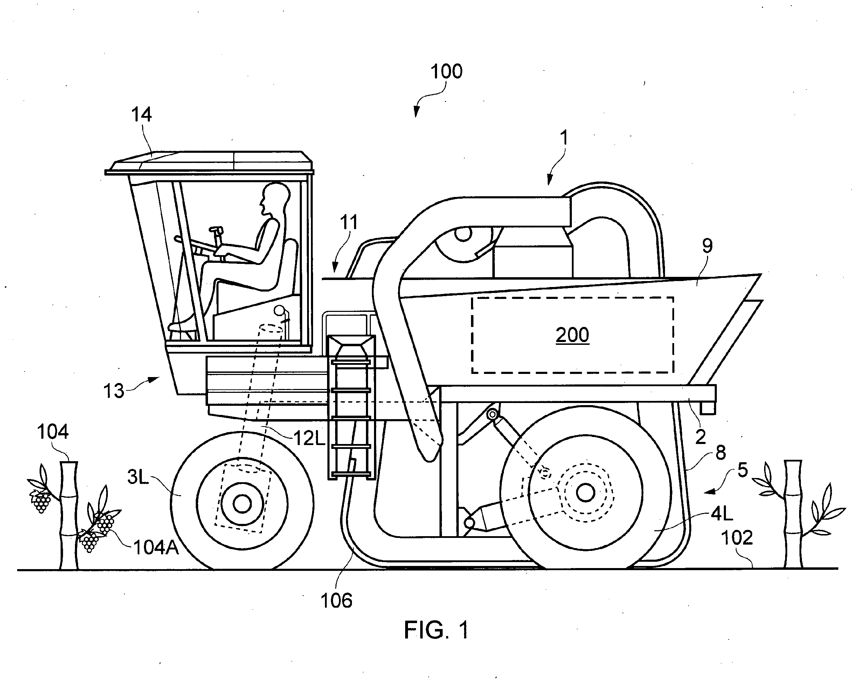

Turning to Figure 1, a fruit harvesting machine 100 is shown in an agricultural field 102. The fruit harvesting machine 100 is configured for harvesting grapes 104A from vines 104. As the machine 100 drives forward, the vines 104 passes through a harvesting system 106 mounted to the underside of the fruit harvesting machine 100. The harvesting system harvests material from the vines 104, the harvested material comprising a mixture of grapes 104A and other debris such as leaves and branches.

It has been found that the harvesting process, as well as other processes of transferring harvested material around the machine 100, can inadvertently result in large amounts of juice being released from the grapes 104A. In conventional systems known in the art, this juice may leak out from the fruit harvesting machine 100 or be otherwise lost, reducing the harvested yield. Juice loss is due to a number of factors. Firstly, soft and juicy grapes require delicate handling to minimize juice losses. However, conventional grape harvester machines 100 often employ mechanical shaking or vibrating systems to detach the grape clusters from the vines. These mechanical actions can cause excessive force on the grapes, leading to premature juice extraction. In addition, the grape harvesting machine 100 may comprise internal transport systems for moving harvested material within the machine 100, such as elevators, discharge units, and the like. These transport systems also result in premature juice extraction and play a major role in juice losses. This initial juice loss can be challenging to prevent entirely, as the grape harvesting process involves some agitation to detach the grapes. After the grapes 104A are detached, the harvester system 106 of the machine 100 aims to separate the grapes 104A from leaves, stems, and other debris, which may involve fans, blowers, and/or vibrating tables. However, when dealing with fragile fruit such as soft and juicy grapes, these mechanisms may not effectively separate the grapes from the unwanted materials. The excessive moisture content and the delicate nature of the grapes 104A can cause them to stick together, making it more difficult for the harvesting system 106 to efficiently remove the debris without losing some juice.

Soft and juicy grapes 104A in particular are more susceptible to damage and bursting during harvesting. The delicate skin of these grapes can rupture easily, leading to juice losses. Juice can also be expelled and lost if the flesh of the grapes is crushed or broken. Even slight compression or impact during handling can result in juice leakage. This is especially relevant for grape varieties used in winemaking, as the juice is crucial for producing high-quality wines.

To recover this fruit juice, the harvesting system 106 therefore transfers the harvested material to a fruit juice recovery system 200 onboard the fruit harvesting machine 100.

In the example shown, the mobile fruit harvesting machine 100 comprises a self-propelled machine on which the fruit juice recovery system 200 and the fruit harvesting system 106 are permanently or removably mounted. However in other examples, the mobile fruit harvesting machine 100 may be comprised in a trailed "pull-behind" system, which is towed by a tractor. Furthermore, while the fruit harvesting machine 100 has been described as a grape harvesting machine for harvesting grapes, it will be appreciated that the present disclosure is also applicable when harvesting other kinds of fruits. The problem of juice loss is typical for fruits that are juice rich and berry like, particularly grapes, but also cherries and other types of berries, especially bigger, more fragile berries such as blackberries or raspberries. The collection systems of some fruit harvesting machines can be powerful enough to damage or cut through tree branches, making them easily capable of damaging even comparatively robust fruits with tough skins, such as oranges. Thus, the present disclosure is also applicable for harvesting larger and/or more robust fruits such as oranges and citrus fruit, coffee fruit, olives, etc.

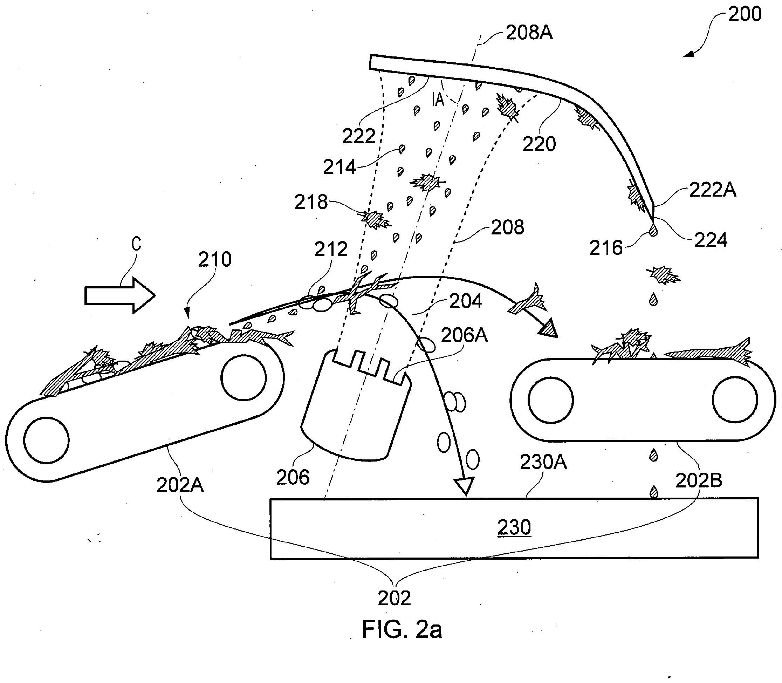

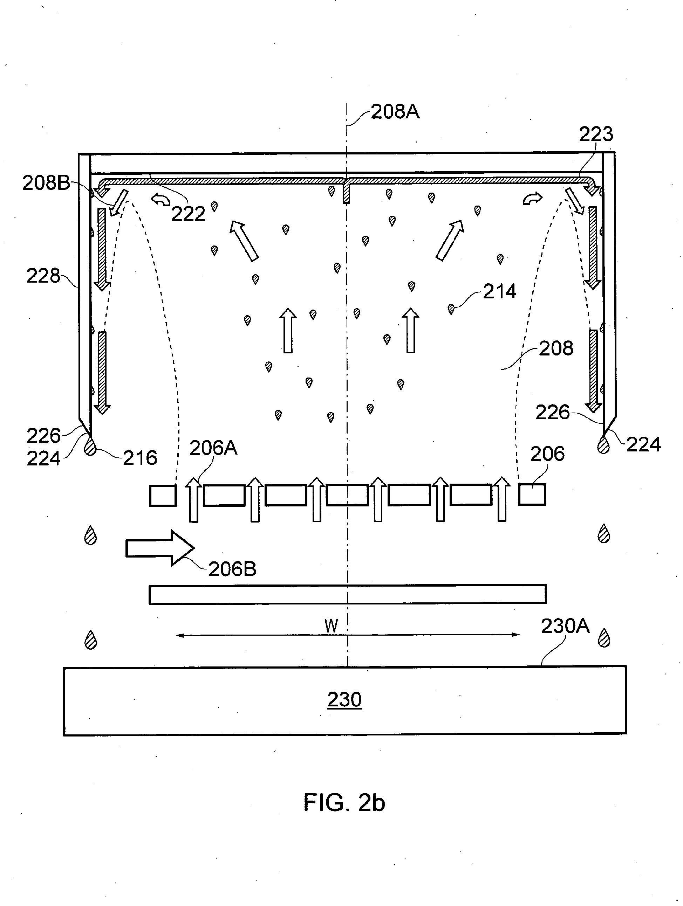

Turning to Figures 2a and 2b, an exemplary fruit juice recovery system 200 is shown. The system 200 comprises a conveyor 202 configured to receive the harvested material 210, which now includes a mixture of individual fruit or fruit bunches 212, fruit juices 214 and solid debris including high-drag-coefficient debris 218 such as leaves and low-drag-coefficient debris such as twigs 219. The conveyor conveys the harvested material in a conveying direction C through a separation region 204. In the example shown, the conveyor comprises an entry conveyor 202A and an exit conveyor 202B. In the example shown, the entry and exit conveyors 202A, 202B both comprise conveyor belts. However, in other examples, the conveyor may comprise a bucket system, rail system, wheel system, a roller, a slide/chute, or any suitable combination thereof.

In the example shown, the entry conveyor 202A receives the harvested material 210, and launches it through the separation region 204 towards the exit conveyor 202B. The harvested material 210 is launched in a ballistic trajectory, in the sense that the harvested material is launched into free-fall with a velocity component in the conveying direction C, and an initial velocity component either upwards or downwards (but increasingly downwards over time due to gravity). In other examples, the harvested material 210 may not be launched into freefall. For example, the harvested material 210 may be launched to slide across a plate between the entry and exit conveyors 202.

An airflow system 206 generates a directional airflow 208 within the separation region 204. The airflow 208 is angled substantially non-parallel to the conveying direction C. In the example shown the direction of the airflow 208, as indicated by the airflow centreline 208A, is offset towards the vertical, but not beyond the vertical. That is, the airflow 208 does not have a velocity component in the opposite direction to the conveying direction C.

The trajectory taken by each object of harvested material through the airflow 208 is a function of its weight, shape, and drag coefficient. Objects with a large surface area and drag coefficient relative to their mass, like leaves 218 and small juice droplets 214, experience a large deflection force from an airflow relative to their mass, and thus will experience a high drag force. Objects with a smaller surface area and drag coefficient relative to their mass, like fruit 212 and twigs 219 will experience a lower drag force.

The airflow 208 is sufficiently powerful to deflect the trajectory of high-drag-coefficient materials in the harvested material 210, which includes lighter debris such as leaves 218, causing them to rise upwards. Fruit juice 214 within the harvested material 210 is also deflected by the airflow 208. However, the drag force imparted by the airflow 208 on the dense fruit 212 is relatively low compared to their weight, and their trajectory is relatively unaffected. The fruit 214 thus follows a substantially purely ballistic trajectory through an orifice 230A into a storage receptacle 230. The material with an intermediate drag coefficient such as twigs 219 is somewhat deflected by the airflow 208 - it is not lifted like the fruit juice 214, but it is deflected from the purely ballistic trajectory followed by the fruit 212. This intermediate drag coefficient material 219 lands on the exit conveyor 202B and is carried out of the fruit juice recovery system 200.

The airflow system 206 may comprise a duct as shown, but in other examples the airflow system may comprise a fan, jet, or other airflow-generating or shaping component. The airflow system 206 may be located upstream of the separation region 204 and configured to create the airflow 208 by blowing, or located downstream of the separation region 204 and configured to create the airflow 208 by suction.

The separation region 204 is the region in which the airflow 208 acts on the harvested material 210 so as to cause the high drag coefficient debris 218 such as leaves 218 and the fruit juice 214 to be separated from other components of the harvested material 210. In the example shown, the fruit juice 214 is suspended in the airflow 208 in the form of small droplets. However, in some examples, the volume of fruit juice 214 may be sufficient to form airborne rivulets or streams suspended in the airflow 208. In the example shown, the separation region 204 is a region of free space between the entry 202A and exit 202B conveyors. However, in other examples the airflow 208 may be directed to pass over a conveyor 202 such that the separation region 204 overlaps with the conveyor. The juice 214 is blown off the conveyor 202 and up to the impingement surface 220.

An impingement surface 220 is positioned downstream of the separation region 204 along the airflow 208. The impingement surface 220 comprises a collection region 222 configured to collect fruit juice 214 from the airflow 208. The fruit juice 214 is thus collected from the separation region 204 by the airflow 208 and conveyed to the collection region 222 of the impingement surface 220.

Once collected by the impingement surface 220, the fruit juice 214 flows down a juice flow path 223 to a delivery region 224 of the impingement surface 220. In the example shown, the impingement surface 220 comprises side walls 228, extending from the impingement surface 220 towards the separation region 204 and conveyors 202. For clarity, the side walls are not shown in Figure 2a. In this example, delivery regions 224 are located at the lowermost end of the side walls 228, i.e. the end closest to the separation region 204. The side walls 228 help to direct the airflow 208 towards the upper impingement surface 222 and contain the suspended fruit juice 214 within the fruit juice recovery system 200. As shown, the side walls 228 meet the collection region 222 to form a corner, but in other embodiments the side walls 222 may be smoothly curved to meet the collection region 222, or even integrally formed to provide a single continuous impingement surface 220 with a collection region and a side wall region.

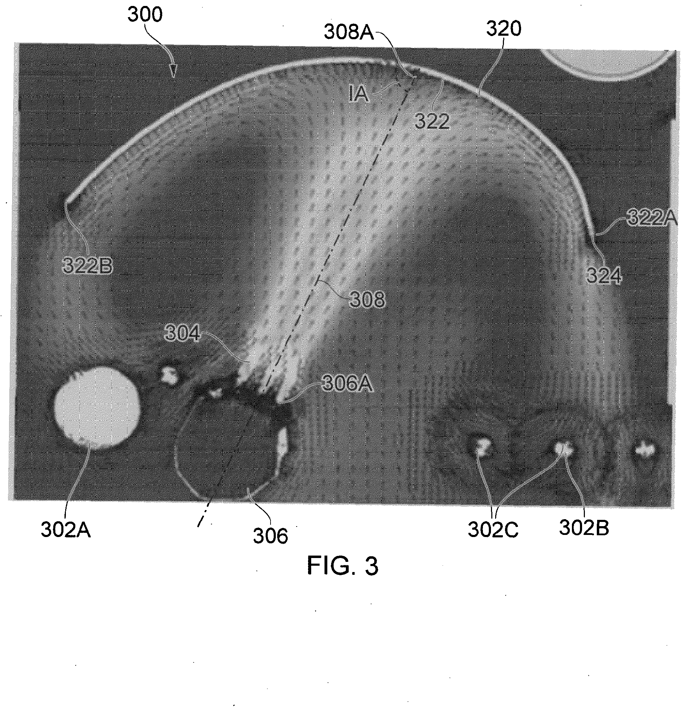

Meanwhile, the high-drag-coefficient debris 218 such as leaves which reaches the collection region 222 is diverted in a different direction along the collection region 222. In the example shown, the impingement surface 220 is angled and curved to encourage leaves 218 to slide along the collection region 222 and out of the airflow 208, whereupon they drop off an end 222A of the collection region and onto the exit conveyor 202B. The end 222A also serves as a delivery region 224. Collected fruit juice 214 may also flow along the angled and curved collection region 222 and collect at the edge 222A, whereupon it aggregates into larger droplets 216 and drops off the impingement surface 220. These droplets 216 may travel through the exit conveyor 202B, as will be discussed further in relation to Figure 3.

Along the juice flow path 223, the fruit juice 214 aggregates into larger droplets 216 - that is, droplets larger than the droplets which were suspended in the airflow 208. The delivery region 224 is configured to encourage the larger fruit juice droplets 216 to detach from the impingement surface. In the example shown, an aggregator 226 is positioned at the end of the juice flow path 223, to help the fruit juice aggregate into even larger droplets 216. The aggregator 226 is formed by the impinging surface 220 terminating in one or more angled corners at the end of the delivery region 224. The angled corner causes liquid to accumulate under its own surface tension. These angled corners can be considered as a sawtooth profile or "crocodile teeth" in some examples. Thus as small juice droplets 214 reach the angled corner, they combine to form larger droplets 216. When they become sufficiently heavy, the larger droplets 216 fall from the delivery region 224 into an orifice 230A of the storage receptacle 230. Following collection in the storage receptacle 230, the juice may be subject to additional cleaning or purification steps, e.g. to remove small dirt particles or bacteria.

In the example shown, fruit 212 and extracted juice 216 are collected in a common storage receptacle 230. In other examples, the receptacle 230 may only store extracted fruit juice 216, while collected fruit 212 is stored elsewhere.

The fruit juice recovery system 200 may be configured to recover into the storage receptacle 230 at least 75%, and preferably at least 90% of juice 214 collected from airflow 208.

The airflow 208 flows along an axis 208A. As will be discussed in further detail in relation to Figure 3, the airflow may be configured such that the airflow axis 208A meets the collection region 222 at impingement angle IA, wherein the impinging angle IA is between 45 degrees and 90 degrees. Angling the impinging angle IA less than 90 degrees directs the airflow 208 and high-drag-coefficient debris 218 across the collection region 222 and off the sides of the impingement surface 220, and away from the collection region 222 where debris 218 is initially collected. That is, when the airflow 208 meets the collection region 222 the airflow 208 comprises a velocity component across the collection region 222, as well as a velocity component into the collection region 222. The velocity component across the collection region 222 is what directs the debris 218 across the collection region 222. Preferably, the impinging angle IA is less than 90 degrees, such that the airflow 208 has a component in the conveying direction C. This ensures that the conveyor 202 and the airflow 208 work together to impart momentum onto the harvested material 210 in the conveying direction C, which allows the debris 218 to travel further along the collection region 222.

In the example shown, the fruit juice recovery system 200 is configured such that the airflow 208 has a vertical component, such that the high-drag-coefficient debris 218 and fruit juice 214 is lifted upwards. This ensures that high-drag-coefficient debris 218 and fruit juice 214 will be lifted all the way to the impingement surface 220, while lower-drag-coefficient debris 219 will begin to fall back down under its own weight. In other examples however, the airflow 208 may blow horizontally, rather than with a vertical component.

Solid, low-density debris 218 such as leaves are carried upwards by the airflow 208. To assist with the separation of fruit juice 214 from solid debris at the collection region 222, the collection region 222 is configured to face downwards. That is, the collection region 222 is angled wholly or partially downwards. This advantageously assists in separating fruit juice 214 from solid debris collected by the airflow 208. Liquids such as fruit juice 214 exhibit surface tension, which allows them to adhere themselves against gravity on downwards-angled surfaces. In some examples, the aggregators 226 may also be configured to help separate fruit juice from debris. Thus when encountering the downwards-facing collection region 222, the liquid fruit juice 214 is able to hold itself on the collection region 222, while at least a proportion of the dry high-drag-coefficient solid debris 218 in the airflow 208, will simply bounce off the collection region 222 without being collected.

The impingement surface 222 may comprise an adhesion-enhancing surface, to encourage liquid to adhere to the impingement surface while preventing solid debris from becoming attached. An exemplary impingement surface is stainless steel, which has a smooth and continuous surface which encourages liquid to adhere, while providing few cracks or holes for solid debris to become stuck in.

The impingement surface 220 is configured to generate a pressure gradient along the juice flow path 223, the pressure gradient induces collected fruit juice 214 to flow from the collection region 222 to the delivery region 224 along the juice flow path 223. In the example shown, this pressure gradient is created by positioning the delivery regions 224 at the bottom of the side walls 228, vertically lower than the collection region 222. This causes collected fruit juice 214 to flow from the collection region 222 to the delivery region 224 under their own weight. In addition, as the airflow 208 meets the impingement surface, at least a portion of the airflow 208B is diverted by the impingement surface 220 to flow across the collection region 222 and down the side walls 228 to the delivery region 224, pushing collected fruit juice along the juice flow path 223.

The airflow system 206 may direct the airflow 208 with a longitudinal or lateral component as well as a vertical component. For example, as shown the airflow 208 may have a component in the conveying direction C. This enables the airflow 208 to push debris across the separation region 204 to the exit conveyor 202B. In other examples the airflow may have a component opposite to the conveying direction, causing separation to begin earlier and increasing the compactness of the fruit juice recovery system 200 along the conveying direction C.

In some examples, the fruit juice recovery system 200 is configured such that the conveying direction C is perpendicular to the direction of travel of the fruit harvesting machine 100. The conveying direction C may point outwards from the centreline of the . fruit harvesting machine 100. This advantageously increases the compactness of the fruit juice recovery system 200, and allows the juice receptacles 230 to be positioned on the exterior of the fruit juice harvesting machine 100, allowing them to be more easily accessed or removed. In other examples, the fruit juice recovery system 200 may be configured such that the conveying direction C is parallel to the direction of travel.

The width of the impingement surface 220 may be equal or wider than the width W of the conveyor(s). This ensures that fruit juice 214 will be captured from the airflow 208 even if the airflow 208 expands downstream.

The airflow system 206 comprises an air inlet 206B from which air is received. The air is directed out of a plurality of outlet vents 206A spaced along the width W of the conveyor in order to generate the airflow 208. This ensures that fruit juice 214 is lifted away from the separation region across the full width W of the conveyors 202.

In some examples, a property of the fruit juice recovery system 200 may be adjustable by a user in order to optimise the separation and fruit juice recovery process for different scenarios. For example the speed of the entry conveyor 202A and/or exit conveyor 202B or the power of the airflow system 206 may be adjustable, or the angle of the entry conveyor 202A may be adjustable to change the angle of the conveying direction C. Alternatively or additionally, the height, position or angle of the impingement surface 220 may be adjustable. This flexibility allows operators to adapt to different grape varieties, vineyard conditions, and levels of debris. For example, when harvesting grape varieties with larger, denser leaves 218, the height of the impingement surface 220 may be lowered or the airflow system 206 power may be increased to ensure that the leaves 218 can actually reach the collection region 222 and be diverted along the surface of the collection region. Another exemplary grape variety might have smaller, lighter grapes 212. To ensure that the grapes 212 follow the correct trajectory, the entry conveyor 202A may be configured to run at a higher speed, or angled such that the conveying direction C has a larger vertical component.

Using a CFD-generated airflow plot, Figure 3 illustrates the airflow patterns around another exemplary fruit juice recovery system 300. Lighter colours indicate higher airflow velocities, and darker colours indicate lower velocities.

The airflow plot shows the velocity directional airflow 308 being directed from outlet vents 306A of the airflow system 306 through a separation region 304 towards the impingement surface 320. The velocity of the airflow 308 is sufficient to lift the high-drag-coefficient debris 218, which also lifts the fruit juice 214, but not so great as to become turbulent and unpredictable.

The impingement surface comprises a collection region 322 and a delivery region (not shown). The axis 308A of the airflow 308 meets the collection region 322 at an impingement angle IA. The impingement angle IA is angled such that once the airflow 308 meets the collection region 322, at least a portion of the airflow 308 is directed to flow across the impingement surface 320 towards the downstream open end 322A of the collection region 322, from which debris can exit the machine and fruit juice can be collected. In the example shown, the impingement surface 320 is curved such that at least a portion of the collection region 322 has a tangent that is angled (i.e., not perpendicular) with respect to the airflow 308. In other examples, the airflow may be directed using a flat, angled impingement surface 320, or an impingement surface 320 which comprises flat or planar regions that are angled in the same way with respect to the airflow 308.

Inevitably, airflow 308 is also directed to flow across the impingement surface 320 towards the upstream open end 322B of the collection region 322. However, the impingement surface 320 and its arrangement relative to the axis 308A of the airflow 308 can be designed such that the majority of the airflow 208 is directed towards the downstream open end 322A of the collection region 322. The force of the airflow 308 thus assists in pushing collected high-drag-coefficient debris from the collection region 322 across the collection region 322 and off the impingement surface 322. To direct a substantial component of the airflow 308 along the impingement surface, the impingement angle IA is preferably between 45 degrees and 90 degrees.

The impingement surface 322 in this example is also curved so as to encourage the airflow 308 to recirculate towards the airflow system 306. This ensures that the airflow 308 is contained within the fruit juice recovery system 300 and prevents suspended juice from being spread into the rest of the mobile fruit harvesting machine 100.

In the example shown, the conveyor system 302 comprises an entry 302A and exit 302B conveyor either side of the separation region 304. The entry conveyor 302A comprises a conveyor belt (although the belt is too small to be seen in the airflow plot and only the driving wheel is visible), and the exit conveyor 302B comprises a plurality of driven rollers 302C. The rollers 302C are spaced apart such that solid debris such as leaves and twigs (not shown) are rolled from one roller 302C to the next, and thereby passed out of the fruit juice recovery system. Hower, fruit juice droplets (not shown) falling from the delivery region 324 at the downstream end 322A of the collection region 322 fall between the rollers 302C and into a storage receptacle (not shown). Alternatively, the exit conveyor 202B may comprise a conveyor belt, wherein the belt comprises holes large enough to allow the fruit droplets to pass through, while solid debris lands on the belt and is conveyed away.

To encourage fluid flow from the collection region to the delivery region, the impingement surface may comprise one or more aggregators. As well as directing collected fruit juice down the juice flow path, aggregators may cause smaller juice droplets to collect and accumulate into larger droplets.

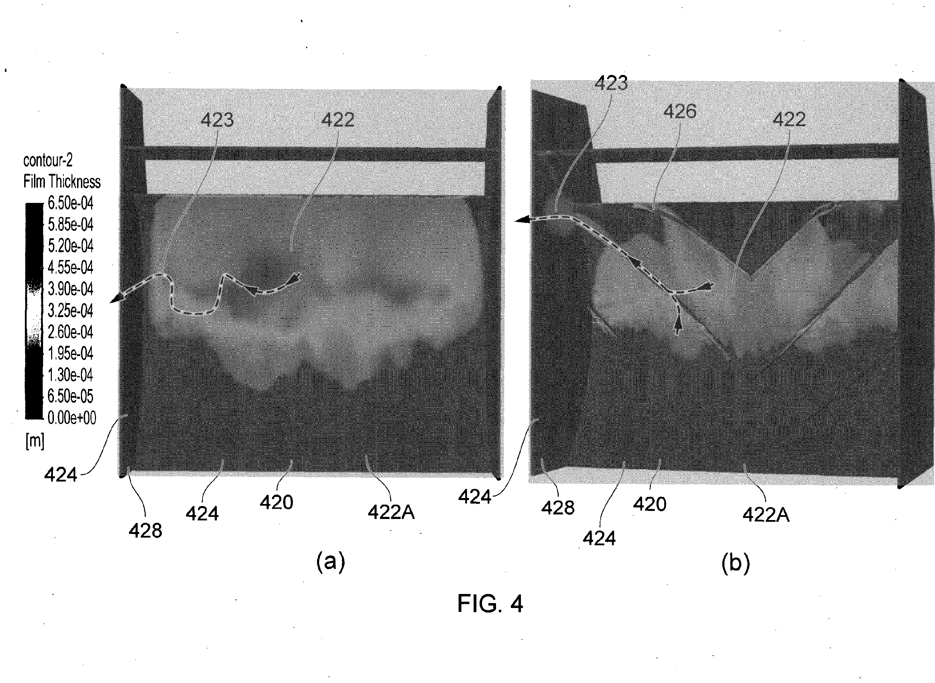

Figure 4 shows two examples of impingement surfaces 420. The buildup of juice as a surface film in use has been simulated using CFD, and is represented on the surface of the impingement surfaces 420 using shading. A lighter shade indicates a thicker film and hence higher fluid buildup. Both impingement surfaces 420 comprise side walls 428, a collection region 422 and a delivery region 424.

The first surface 420 shown in Figure 4a comprises a simple curved surface between the collection region 422 and the delivery region 424. As shown by the lighter shading around the collection region 422, there is a tendency for a thick film of fruit juice to accumulate on the impingement surface 420 in use around the collection region 422.

To further improve the juice flow from the collection region 422 to the delivery region 424, Figure 4b shows a second impingement surface 420 comprising an aggregator 426 positioned on the juice flow path 423 between the collection region 422 and the delivery region 424. That is, juice flows from the collection region 422 to the delivery region 424 via the aggregator 426. The aggregator 426 in this example comprises a plurality of strakes. The strakes 426 prevent juice accumulating into a thick film. By counteracting surface tension, the strakes 426 direct juice to flow along the juice flow path 423 to the delivery region 424. The strakes, in particular the edge and point of each strake, also provide a nucleation surface for small fruit juice droplets to accumulate into larger droplets.

The strakes 426 extend and taper from the side walls 428 towards the centreline of the collection region 422. The lower heights of the strakes 426 towards the centreline provides an open path across the centreline of the curved surface of the collection region 422. Solid debris such as leaves which reach the collection region 422 can be swept along this path the by the airflow and off the impingement surface 420. Thus, the tapering of the strakes 426 helps direct solid debris in one direction, while fruit juice is directed in another direction, thereby separating the debris and juice.

The strakes 426 may be integrally formed with the impingement surface 420, or alternatively they may formed separately and attached to the impingement surface 420 by any suitable means, such as welding or bolting.

As a result of the aggregator 426, the film thickness over the second impingement surface 420 in Figure 4B is significantly lower compared to the first impingement surface 420 of Figure 4A.

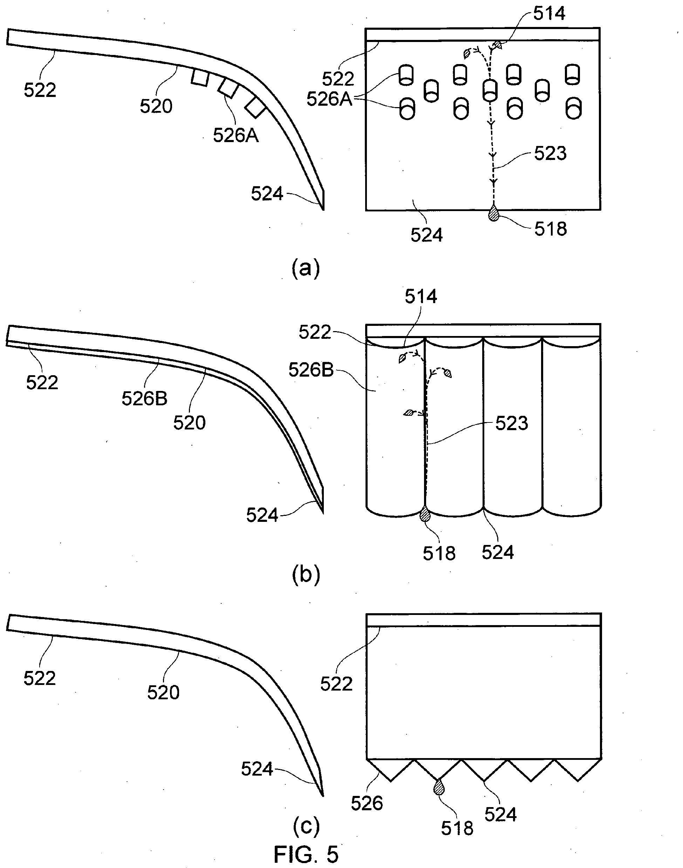

Figure 5 shows alternative examples of aggregators. Each of Figures 5a-c shows a front and side view of an impingement surface 520, comprising a collection region 522 at one end and a delivery region 524 at the other end.

In Figure 5a, the aggregator comprises a plurality of cleat protrusions 526A. Like the strakes 426 in Figure 4, the cleat protrusions 526a prevent fruit juice from accumulating in a stagnant film on the impingement surface 520, and provide a nucleation surface for larger droplets 518 to form. The cleats 526A may have a circular cross section as shown, but in other embodiments they may have a different cross-section, such as oval or teardrop-shaped. The cleats 426A may be arranged and/or shaped to deflect or block solid debris travelling across the impingement surface 520, such that the solid debris does not reach the delivery region 524. The cleats 526 thereby assist in separating the collected juice from solid debris.

In Figure 5b, the surface of the impingement surface 520 comprises corrugations 526B running along the impingement surface from the collection region 522 to the delivery region 524. In this example, the delivery region 524 is located at one end of the impingement surface 520. The corrugations 526B act as aggregators, as the collected fruit juice tends to accumulate onto and flow along the troughs (or in other examples, peaks) of the corrugations 526B. The corrugations 526B may have a curved cross-section as shown, but other cross-sections are also contemplated. The corrugations 526B are shown as being equal width across the width of the impingement surface 520, such that the peaks and troughs by the corrugations extend straight along the impingement surface 520. However, in other examples, the corrugations 526B may have a more complex geometry, e.g. curving the peaks and troughs to follow the natural flow path 523 of the collected fruit juice. The corrugations 526B may have a width on the order of cm or mm.

In Figure 5c, the edge of the delivery region 524 is formed into a sawtooth profile 526C. Fruit juice flowing from the collection region 522 collects at the tip of each sawtooth 526, where it aggregates into larger droplets 516 and drops off the delivery region 524. As Figure 5C shows, positioning an aggregator along the juice flow path 523 may include positioning the aggregator at the end of the juice flow path.

Rather than a physical structure, the aggregator may comprise a material or texture configured to encourage the formation of larger droplets and prevent film buildup. For example, at least part of the impingement surface 520 may be coated with a hydrophobic coating which encourages larger droplets to form. It will be understood that a combination of any of the aggregators disclosed herein may be used together. For example, an impingement surface may comprise a plurality of cleat protrusions overlaid on an undulating or corrugated surface, leading down to a sawtooth-profiled delivery region.

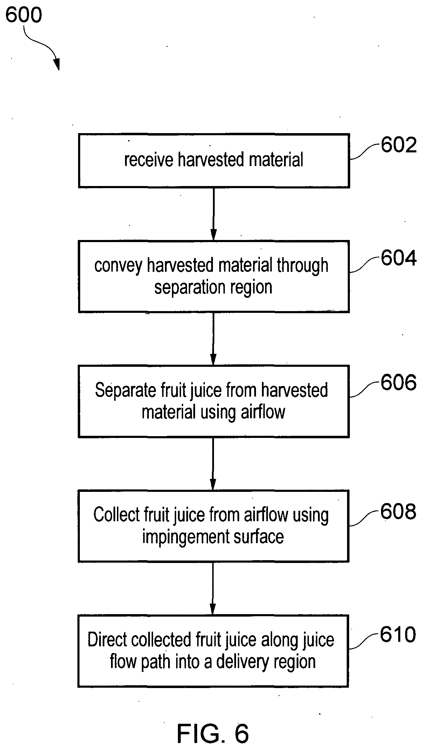

Turning to Figure 6, a method 600 for processing harvested fruit within a mobile fruit harvesting machine is described. The method may be carried out using the mobile fruit harvesting machine 100 and fruit juice recovery system 200 described above.

In a first step, harvested material is received 602, the harvested material comprising a mixture of fruit, fruit juice and debris.

Next, the harvested material is conveyed 604 in a conveying direction through a separation region.

Next, the fruit juice is separated 606 from the harvested material by directing an airflow through the harvested material in the separation region, the airflow being angled substantially non-parallel to the conveying direction, such that the fruit juice is suspended in the airflow.

Next, the fruit juice is collected 608 from the airflow using a collection region of an impingement surface.

Next, the collected fruit juice is directed 610 along a juice flow path from the collection region into a delivery region of the impingement surface for collection into a juice collection region.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A mobile fruit harvesting machine (100), comprising:
a conveyor (202) configured to receive harvested material (210), the harvested material (210) comprising a mixture of fruit (212), fruit juices (214) and debris (218), and convey the harvested material (210) in a conveying direction (C) through a separation region (204);
an airflow system (206) configured to direct an airflow (208) through the harvested material (210) in the separation region (204), the airflow (208) being angled substantially non-parallel to the conveying direction (C), such that the fruit juice (214) is suspended in the airflow (208), and
an impingement surface (220) for collecting at least part of the fruit juice (214) from the airflow (208), the impingement surface (222) comprising:
a collection region (222) for collecting fruit juice (214) from the airflow (208);
a delivery region (224) for directing the collected fruit juice (214) into a juice receptacle (230); and
a juice flow path (223) configured such that the collected fruit juice (214) flows from the collection region (222) to the delivery region (224) along the juice flow path (223).

2. The system of claim 1, wherein the impingement surface (220) is located downstream of the separation region (204) along the airflow (208).

3. The system of any preceding claim, wherein the -impingement surface (220) further comprises an aggregator (226), and optionally the aggregator (226) comprises at least one strake (426) located along the juice flow path (223), or at least one corrugation (526B) extending from the delivery region (224).

4. The system of any preceding claim, wherein the impingement surface (220) is configured such that a component of the airflow (208) flows along the impingement surface (220) from the collection region (223) to the delivery region (224).

5. The system of any preceding claim, wherein the airflow (208) is angled substantially upwards, such that the fruit juice (214) is carried away from the separation region (204) in a direction comprising a vertical component.

6. The system of any preceding claim, wherein the airflow (208) meets the collection region (222) of the impinging surface (220) at an impinging angle (IA), the impinging angle (IA) being less than 90 degrees.

7. The system of any preceding claim, wherein the airflow system (206) comprises a duct comprising a plurality of outlet vents (206A), the outlet vents (206A) being configured to direct the airflow (208) through the separation region (204).

8. The system of any preceding claim, wherein the impingement surface (220) comprises side walls (228) extending towards the separation region (204).

9. The system of any preceding claim, wherein the impingement surface (220) is configured to generate a pressure gradient along the juice flow path (223), the pressure gradient inducing collected fruit juice (214) to flow from the collection region (222) to the delivery region (224) along the juice flow path (223).

10. The system of any preceding claim, wherein the impingement surface (220) is angled or curved such that the delivery region (224) is located vertically lower than the collection region (222).

11. The system of any preceding claim, wherein the impingement surface (220) is downward-facing.

12. The system of any preceding claim, wherein the conveyor (202) is configured to launch a component of the harvested material (210) in a substantially ballistic trajectory passing through the separation region (204).

13. The system of claim 12, wherein the conveyor (202) comprises an entry conveyor (202A) and exit conveyor (202B), wherein the conveyor (202) is configured to launch the component of the harvested material (210) from the entry conveyor (202A) to the exit conveyor (202B).

14. The system of any preceding claim, wherein the mobile fruit harvesting machine is a grape harvesting machine.

15. A method (600) for processing harvested fruit within a mobile fruit harvesting machine, comprising the steps of:
receiving (602) harvested material comprising a mixture of fruit, fruit juice and debris;
conveying (604) the harvested material in a conveying direction through a separation region;
separating (606) the fruit juice from the harvested material by directing an airflow through the harvested material in the separation region, the airflow being angled substantially non-parallel to the conveying direction, |such that the fruit juice is suspended in the airflow;
collecting (608) the fruit juice from the airflow using a collection region of an impingement surface;
directing (610) the collected fruit juice along a juice flow path from the collection region into a delivery region of the impingement surface for collection into a juice collection region.
